# FASCICULE DE BREVET EUROPEEN

(11) **EP 2 564 239 B1**
(45) Date de publication et mention de la délivrance du brevet: **08.01.2014**
(21) Numéro de dépôt: 11719505.7
(22) Date de dépôt: 26.04.2011
(51) Int. Cl.: G01T 1/20, H04N 5/335

(54) **DETECTEUR DE RAYONNEMENT ELECTROMAGNETIQUE A SELECTION DE GAMME DE GAIN**
DETEKTOR ELEKTROMAGNETISCHER STRAHLUNG MIT VERSTÄRKUNGSBEREICHAUSWAHL
ELECTROMAGNETIC RADIATION DETECTOR WITH GAIN RANGE SELECTION

(30) Priorité: 26.04.2010 FR 1053181
(43) Date de publication de la demande: 06.03.2013
(73) Titulaire: Trixell S.A.S., 38430 Moirans (FR); Commissariat à l'Énergie Atomique et aux Énergies Alternatives, 75015 Paris (FR)
(72) Inventeur: ROHR, Pierre, F-38140 Apprieu (FR); MORO, Jean-Luc, F-38700 Le Sappey (FR)
(74) Mandataire: Collet, Alain
(86) Numéro de dépôt international: PCT/EP2011/056590
(87) Numéro de publication internationale: WO 2011/134965

(56) Documents cités:
- EP-A1- 1 998 559
- WO-A1-03/100459
- WO-A1-2009/108182
- US-A1- 2007 096 033
- US-A1- 2008 007 637
- US-A1- 2008 179 490
- US-A1- 2009 200 451

## Description

L'invention concerne un détecteur de rayonnement électromagnétique utilisé pour l'imagerie. Ce type de détecteur comprend un grand nombre de points photosensibles appelés pixels généralement organisés en matrice ou en barrette. Un pixel représente l'élément sensible élémentaire du détecteur. Chaque pixel convertit le rayonnement électromagnétique auquel il est soumis en un signal électrique. Les signaux électriques issus des différents pixels sont collectés lors d'une phase de lecture de la matrice puis numérisés de manière à pouvoir être traités et stockés pour former une image. Les pixels sont formés d'une zone photosensible délivrant un courant de charges électriques en fonction du flux de photons quelle reçoit, et d'un circuit électronique de traitement de ce courant. La zone photosensible comprend généralement un élément photosensible, ou photodétecteur, qui peut par exemple être une photodiode, une photorésistance ou un phototransistor. On trouve des matrices photosensibles de grandes dimensions qui peuvent posséder plusieurs millions de pixels.

D'une façon générale, chaque pixel est constitué d'un élément photosensible, d'un circuit électronique, constitué par exemple d'interrupteurs, capacité, résistances, en aval duquel est placé un actionneur. L'ensemble constitué par l'élément photosensible et le circuit électronique permet de générer des charges électriques et de les collecter. Le circuit électronique permet généralement la réinitialisation de la charge collectée dans chaque pixel après un transfert de charge. Le rôle de l'actionneur est de transférer les charges collectées par le circuit dans un bus de lecture. Ce transfert est réalisé lorsque l'actionneur en reçoit l'instruction. La sortie de l'actionneur correspond à la sortie du pixel.

Ainsi, un détecteur comprend une matrice de pixels similaires, chaque colonne (ou chaque ligne) de pixels adjacents étant généralement reliés à un même bus de lecture.

Dans ce type de détecteur, un pixel fonctionne selon deux phases : une phase de prise d'image, durant laquelle le circuit électronique du pixel accumule les charges électriques générées par l'élément photosensible, et une phase de lecture, au cours de laquelle les charges collectées sont transférées dans le bus de lecture, grâce à l'actionneur.

Lors de la phase de prise d'image, l'actionneur est passif et les charges électriques collectées font évoluer le potentiel en un point de connexion entre l'élément photosensible et l'actionneur. Ce point de connexion est appelé noeud de collecte des charges du pixel. Lors de la phase de lecture l'actionneur est actif afin de libérer les charges accumulées au niveau du point photosensible afin de les acheminer ou de les recopier, voire de recopier le potentiel du noeud de collecte des charges vers un circuit de lecture du détecteur.

Par actionneur passif, on entend un actionneur n'étant pas en contact électrique avec le circuit de lecture. Ainsi, lorsque l'actionneur est passif, les charges collectées dans le pixel ne sont ni transférées, ni recopiées dans le circuit de lecture.

Un actionneur peut être un interrupteur commandé par un signal d'horloge (il s'agit généralement d'un transistor). Il peut également s'agir d'un circuit suiveur ou de tout autre dispositif permettant de reporter ou transférer la charge collectée dans le pixel dans le circuit de lecture, par exemple un dispositif connu sous l'acronyme anglo-saxon : CTIA (« Capacitive Translmpedance Amplifier » pour amplificateur de transfert d'impédance capacitive).

Ce type de détecteur de rayonnement peut être utilisé pour l'imagerie de rayonnements ionisants, et notamment les rayonnements X ou y, dans le domaine médical ou celui du contrôle non destructif dans le domaine industriel, pour la détection d'images radiologiques. Les éléments photosensibles permettent de détecter un rayonnement électromagnétique visible ou proche du visible. Ces éléments ne sont pas, ou peu, sensibles au rayonnement incident au détecteur. On utilise alors un convertisseur de rayonnement appelé scintillateur qui convertit le rayonnement incident, par exemple un rayonnement X, en un rayonnement dans une bande de longueurs d'onde auxquelles sont sensibles les éléments photosensibles présents dans les pixels.

Lors de la phase de prise d'image, le rayonnement électromagnétique sous forme de photons reçus par chaque élément photosensible est converti en charges électriques (paires électrons/trous) et chaque pixel comprend généralement une capacité permettant d'accumuler ces charges pour faire évoluer la tension du noeud de collecte du pixel. Cette capacité peut être intrinsèque à l'élément photosensible, on parle alors de capacité parasite, ou ajoutée sous forme d'un condensateur connecté en parallèle de l'élément photosensible.

Ainsi, selon l'art antérieur, chaque pixel comporte une zone photosensible, comprenant un seul élément photosensible.

Les éléments photosensibles actuels ne peuvent pas s'adapter directement aux variations d'illumination du rayonnement. Dans un oeil humain, cette adaptation est réalisée par l'iris qui tend à réduire le flux lumineux incident lors d'une forte illumination. De même dans un appareil photographique cette fonction est réalisée au moyen d'un obturateur. Dans un détecteur de rayonnement, tel que décrit plus haut, cette adaptation est beaucoup plus délicate à réaliser.

On a tenté de s'adapter aux variations d'illumination en ajoutant, dans chaque pixel, un condensateur que l'on peut connecter, en cas de besoin, en parallèle de l'élément photosensible. Plus précisément, en cas de faible luminosité, pour tous les pixels du détecteur, les condensateurs supplémentaires sont déconnectés. En cas de forte illumination du détecteur, les condensateurs de tous les pixels sont connectés afin de réduire la tension du pixel. En d'autres termes, ce condensateur permet de modifier le gain du pixel pour sa fonction de transfert entre le nombre de photons reçus et la tension du pixel. La connexion du condensateur supplémentaire se fait au moyen d'un interrupteur électronique comme par exemple un transistor de type MOS, selon l'abréviation anglo-saxonne de « Metal Oxid Semiconductor » pour semi-conducteur en oxyde métallique.

Cette solution, permettant d'utiliser le pixel dans des gammes de gain distinctes, présente plusieurs inconvénients. Tout d'abord l'interrupteur permettant de raccorder le condensateur supplémentaire perturbe la tension du noeud du pixel en générant un courant de fuite. Ce courant dégrade les performances du pixel notamment lorsque le condensateur doit être déconnecté. Ensuite, une partie de la surface du pixel est occupée par le condensateur supplémentaire au détriment de la surface de l'élément photosensible.

On connait le document EP 1 998 559 qui décrit un capteur d'image dans lequel on associe un élément sensible à haute sensibilité et un élément sensible à basse sensibilité. Durant la prise d'image l'élément à haute sensibilité est réinitialisé dès que les charges qu'il accumule atteignent un seuil. L'image finale est définie en fonction des charges accumulées et du nombre de réinitialisations de l'élément à haute sensibilité pendant la prise d'image. Ce fonctionnement se fait dans chacun des pixels du capteur indépendamment et ne peut donc pas être assimilé à une sélection de gamme de gain qui par définition doit être commune à tous les pixels d'un détecteur.

L'invention vise à pallier tout ou partie des problèmes cités plus haut en proposant un détecteur de rayonnement dans lequel une sélection de gamme de gain peut se faire à l'intérieur de chaque pixel sans faire appel à un condensateur supplémentaire pour la sélection.

A cet effet, l'invention a pour objet un détecteur de rayonnement électromagnétique comprenant plusieurs pixels organisés dans une matrice de lignes et de colonnes, chaque colonne, ou chaque ligne, de pixels étant reliés à un même bus de lecture de la matrice, un pixel représentant l'élément sensible élémentaire du détecteur, chaque pixel convertissant le rayonnement électromagnétique auquel il est soumis en un signal électrique, caractérisé en ce que chaque pixel comprend :
- plusieurs éléments photosensibles, chaque élément photosensible convertissant le rayonnement électromagnétique qu'il reçoit en un signal électrique élémentaire,
- et des moyens pour sélectionner parmi les signaux électriques élémentaires générés par les éléments photosensibles d'un pixel, pour former le signal électrique de sortie du pixel en fonction d'une gamme de gain choisie pour le détecteur.

Chaque pixel comprend une zone photosensible dans laquelle sont disposés plusieurs éléments photosensibles.

La sélection de gamme de gain est extérieure au pixel. La gamme de gain peut être choisie manuellement par un opérateur. On peut également automatiser le choix de la gamme de gain en disposant par exemple à proximité du détecteur un photodétecteur, comme par exemple une cellule photoélectrique, délivrant une information sur l'illumination moyenne reçue par le détecteur. Le choix de la gamme se fait alors en comparant cette illumination moyenne par rapport à des seuils prédéfinis.

En cas de faible illumination, le gain du pixel doit être le plus fort possible, on utilise alors tous les éléments photosensibles du pixel, ou tout au moins le plus sensible, pour former le signal électrique de sortie du pixel. Grâce à une plus grande disponibilité de surface pour des éléments photosensibles, on peut augmenter le gain maximum du pixel. Autrement dit, pour une même surface de pixel, on améliore la sensibilité du détecteur lors de faible illumination.

L'invention peut être mise en oeuvre dans un détecteur monochrome dans lequel tous les pixels sont monochromes et identiques. Tous les pixels détectent le même rayonnement. On peut également mettre en oeuvre l'invention dans un détecteur couleur dans lequel sont disposés des groupes de pixels monochromes. Dans un même groupe, chaque pixel est destiné à détecter le rayonnement dans une bande de longueur d'onde donnée. Un groupe peut par exemple regrouper trois pixels élémentaires dont un détectant un rayonnement rouge, un autre le vert et le troisième le bleu. L'invention peut être mise en oeuvre pour chacun des pixels élémentaires.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un pixel selon un premier mode de réalisation et apte à appartenir à un détecteur selon l'invention ;
la figure 2 représente schématiquement un pixel selon un second mode de réalisation et apte à appartenir à un détecteur selon l'invention ;
la figure 3 représente un exemple de disposition spatiale de plusieurs éléments photosensibles à l'intérieur d'un pixel ;
La figure 4 représente un exemple de détecteur de rayonnement utilisable en radiologie X.

Par souci de clarté, les mêmes éléments porteront les mêmes repères dans les différentes figures.

Les deux modes de réalisation décrivent des pixels comprenant deux éléments photosensibles. Il est bien entendu que l'invention n'est pas limitée à deux éléments photosensibles. Elle peut être mise en oeuvre pour un plus grand nombre d'éléments photosensibles afin d'augmenter le nombre de gammes de gain possibles pour le détecteur.

Un détecteur conforme à l'invention est formé d'un grand nombre de pixels généralement organisés en matrice ou en barrette. Ces pixels sont généralement identiques.

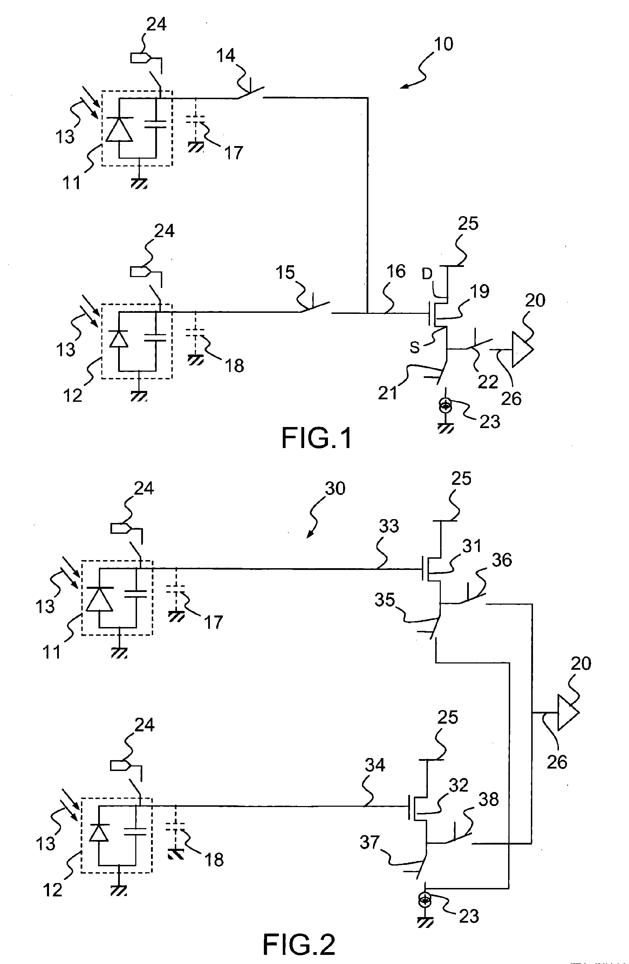

La figure 1 représente un pixel 10 comprenant deux photodiodes 11 et 12 aptes à détecter un rayonnement 13. Les deux photodiodes 11 et 12 sont schématisées sous forme d'une diode et d'un condensateur parfaits, le condensateur, dit condensateur parasite, étant raccordé en parallèle de la diode. Cette représentation permet de comprendre le fonctionnement d'une photodiode qui possède une capacité parasite mise à profit lors de l'illumination par le rayonnement 13 qui tend à charger cette capacité. La charge de la capacité parasite forme un signal électrique élémentaire délivré par chacune des photodiodes 11 et 12 au niveau de leur cathode respective. L'anode de chacune des photodiodes 11 et 12 est raccordée à une masse du détecteur.

Il est bien entendu possible de mettre en oeuvre l'invention pour d'autres familles d'éléments photosensibles tels que des photorésistances et des phototransistors. Des adaptations de schéma sont bien sur nécessaires pour les autres familles.

De plus, un élément photosensible peut être formé de plusieurs photodétecteurs (photodiodes, photorésistances, phototransistor...) convertissant le rayonnement reçu en un seul signal électrique élémentaire.

Le pixel 10 comprend des moyens pour sélectionner les signaux électriques élémentaires d'une ou des deux photodiodes 11 et 12 pour former un signal électrique de sortie du pixel 10 en fonction d'une gamme de gain choisie pour le détecteur. Plus précisément, le signal électrique élémentaire est formé de charges électriques accumulées par l'élément photosensible 11 ou 12 considéré sous forme d'une tension et le signal électrique de sortie est formé par une tension moyenne du ou des éléments photosensibles 11 et 12 sélectionnés. Dans l'exemple représenté, le pixel 10 comprend deux interrupteurs de sélection 14 et 15 permettant chacun de raccorder une des deux photodiodes, respectivement 11 et 12, à un noeud 16 du pixel 10 formant un point de potentiel où un signal de sortie du pixel 10 est formé. De façon plus générale, le pixel 10 comprend au moins un interrupteur de sélection permettant de raccorder respectivement au moins un des éléments photosensibles au noeud 16, situé en amont d'un actionneur 19 permettant la lecture du pixel 10. Dans ce mode de réalisation, l'actionneur 19 est un transistor de type NMOS fonctionnant en mode suiveur.

Le transistor fonctionnant en mode suiveur, à la différence du simple interrupteur, ne met pas en relation le noeud de collecte 16 avec le circuit de lecture mais copie, lors du passage d'un courant généré par un signal d'horloge 23, la valeur de la tension au noeud 16 de collecte du pixel 10 sur une sortie 22 décalée de la tension de seuil Vth du transistor 19. La sortie 22 est ici formée par un interrupteur. Cette copie permet de ne pas altérer la charge accumulée au noeud 16 tout en permettant d'avoir une basse impédance au niveau de la sortie 22.

Dans l'exemple représenté, la surface de la photodiode 11 est plus importante que celle de la photodiode 12. Cette différence de surface est schématisée par la taille des photodiodes 11 et 12 sur la figure. En pratique, on pourra coupler les deux photodiodes 11 et 12 pour une faible illumination et utiliser la photodiode 12 seule pour une forte illumination par le rayonnement 13.

En cas de faible illumination, on pourra aussi utiliser la photodiode 11 seule en laissant ouvert l'interrupteur 15 durant la phase de lecture. Bien que cette variante réduise la surface photosensible utile du pixel 10, cela permet de réduire les composants raccordés au noeud 16 et permet donc de réduire les courants de fuite au niveau du noeud 16. Ceci réduit le bruit présent sur le signal de sortie du pixel 10.

A titre d'alternative, il est possible de se passer de l'interrupteur 15 en laissant en permanence la photodiode 12 connectée au noeud 16 et en fermant l'interrupteur 14 seulement lorsque l'on souhaite changer de gamme de gain en illumination réduite. Cette alternative permet également de réduire les composants connectés au noeud 16 du pixel 10. En généralisant cette alternative, chaque pixel 10 comprend N éléments photosensibles, N étant supérieur ou égal à deux et N-1 interrupteurs de sélection, l'un des éléments photosensibles étant en permanence raccordé à l'actionneur de lecture 19.

Avantageusement, l'élément photosensible 12, en permanence raccordé à l'actionneur de lecture 19, génère un signal élémentaire plus faible que le ou les signaux élémentaires générés par le ou les autres éléments photosensibles, par exemple l'élément photosensible 11, pour un même rayonnement électromagnétique 13 incident.

Des condensateurs 17 et 18 d'ajustement peuvent être connectés en parallèle des photodiodes, respectivement 11 et 12 pour augmenter les capacités associées à chacune des photodiodes 11 et 12. Dans la pratique, le condensateur 18 est souvent nécessaire afin de réduire la tension du signal élémentaire délivré par la photodiode 12. Par contre on peut souvent se passer du condensateur 17 du fait de la plus grande surface de la photodiode 11 et donc de sa plus grande capacité parasite. De façon générale, il est avantageux de se passer des condensateurs ajoutés, et tout au moins du condensateur 17 pour limiter le nombre de composants présents en parallèle des photodiodes 11 et 12. En effet, ces composants génèrent des courants de fuites qui nuisent à la qualité des signaux élémentaires. De plus, ils sont encombrants et réduisent la surface utile de chaque pixel, c'est-à-dire la surface de détection des éléments photosensibles. Ajoutons que l'utilisation d'une photodiode 12 de faible surface permet généralement de se dispenser de l'utilisation d'une capacité d'ajustement 18, ce qui constitue un avantage supplémentaire de l'invention. Si l'on considère le gain de détection de la photodiode 12, le fait d'avoir une faible surface de détection compense l'ajout d'une capacité d'ajustement.

Le choix de la mise en place des condensateurs ajoutés 17 et 18 se fait en fonction des photodiodes choisies et des niveaux de tension souhaitées pour chaque signal élémentaire. Généralement, leur capacité est comprise entre 20% et 500% de la capacité parasite de la photodiode à laquelle ils sont associés.

On a constaté que même si des condensateurs 17 et 18 sont nécessaires, ils sont de valeur et donc de taille plus faible, par exemple 10 à 20 fois plus faible, que ceux utilisés dans l'art antérieur pour modifier la gamme de gain du pixel, et cela concerne notamment la photodiode de faible surface 12. En effet, avec un seul élément photosensible par pixel, celui-ci doit être dimensionné de façon à permettre le gain le plus fort. Le photocourant qu'il génère peut donc être important ce qui impose une valeur de condensateur importante, si on souhaite réduire le gain du pixel pour changer sa gamme de gain. En revanche en mettant en oeuvre l'invention, le condensateur 18 doit simplement être adapté à la photodiode 12 qui ne couvre qu'une partie de la surface du pixel et ne génère donc qu'un courant ou photocourant partiel. Le condensateur 18 est donc de taille plus faible que celui de l'art antérieur.

L'actionneur de lecture 19 du pixel 10 permet de raccorder le noeud 16 à un circuit de lecture 20 du détecteur. L'actionneur 19 est ouvert lors d'une phase de prise d'image au cours de laquelle le signal électrique élémentaire de chaque photodiode 11 et 12 est formé. L'actionneur 19 est fermé lors d'une phase de lecture du pixel 10 au cours de laquelle le signal électrique de sortie est transféré du noeud 16 vers un circuit de lecture 20.

L'actionneur de lecture 19 est par exemple un transistor à effet de champ commandé au moyen de deux interrupteurs 21 et 22 connecté à sa source S. Le drain D du transistor 19 est, quant à lui, raccordé à une source de tension 25. Le transistor 19 fonctionne alors selon un mode suiveur. L'interrupteur 21 permet de raccorder un générateur de courant 23 à la source S et l'interrupteur 22 permet de raccorder la source S au circuit de lecture 20.

L'actionneur de lecture 19, piloté par les interrupteurs 21 et 22, assurent l'adressage du pixel 10 pour sa lecture. La sélection de la ligne se fait par l'interrupteur 21 qui permet le passage du courant dans le transistor 19 fonctionnant en suiveur lors de la phase de lecture. La tension au noeud 16 du pixel 10 est copiée sur l'interrupteur de sortie 22 de pixel 10 à un décalage de Vth près, le potentiel Vth correspondant à la tension de seuil du transistor 19. La sélection de la colonne se fait par l'interrupteur 22 qui est rendu passant pour copier la tension du noeud de collecte 16 sur un bus de lecture colonne 26, connecté à la sortie de l'interrupteur de sortie 22 d'une part et d'autre part au circuit de lecture 20. Cela permet un adressage ligne/colonne adéquat.

Le pixel 10 comprend également des moyens de remise à zéro réalisés, par exemple par une tension d'effacement 24 que l'on peut appliquer aux photodiodes 11 et 12 au niveau de leur cathode respective après une phase de lecture du pixel 10.

Ainsi, selon ce premier mode de réalisation, on a montré comment un pixel pouvait regrouper deux éléments photosensibles, ou photodétecteurs, de surfaces différentes. Généralement, dans une telle configuration, la surface du plus petit élément photosensible sera 2 à 10 fois plus petite que celle du plus grand élément photosensible.

Naturellement, selon ce premier mode de réalisation, l'invention ne se limite pas à l'utilisation de deux éléments photosensibles de surfaces différentes au sein d'un même pixel, mais une pluralité d'éléments photosensibles, pouvant être de tailles différentes, au sein d'un même pixel, ces éléments étant connectés à un même actionneur 19.

La figure 2 représente un pixel 30 dans lequel on retrouve les deux photodiodes 11 et 12 aptes à détecter un rayonnement 13 et les moyens de remise à zéro 24. Dans le pixel 30, contrairement au pixel 10, on ne retrouve pas de noeud 16 commun aux deux photodiodes 11 et 12. Le pixel 30 comprend, associé à chaque photodiode 11 et 12, un transistor fonctionnant selon un mode suiveur, respectivement 31 et 32. Ces composants 31 et 32 sont alternativement utilisés comme des actionneurs. On va à présent montrer comment l'actionneur du pixel 30 est soit le transistor suiveur 31, soit le transistor suiveur 32. Les transistors de lecture, 31 et 32 sont ouverts lors d'une phase de prise d'image au cours de laquelle le signal électrique élémentaire issu de chacune des deux photodiodes 11 et 12 est formé. Lors de la phase de lecture, l'actionneur est soit le transistor suiveur 31, soit le transistor suiveur 32, ce qui permet de sélectionner parmi les photodiodes 11 et 12 celle destinée à former le signal électrique de sortie du pixel 30.

On définit des noeuds élémentaires 33 et 34 où s'accumulent les charges issues respectivement de chaque photodiode 11 et 12. Les noeuds 33 et 34 sont situés en amont des transistors 31 et 32 par rapport au circuit de lecture 20 du détecteur. L'impédance des noeuds 33 et 34 est beaucoup plus élevée qu'en aval des interrupteurs 31 et 32. Le fait de se passer des interrupteurs 14 et 15, décrits dans le précédent mode de réalisation, permet de limiter le nombre de composants raccordés à un noeud élémentaire 33 ou 34. Cela permet de réduire le courant de fuite au niveau de chaque noeud 33 et 34 et d'améliorer la qualité des signaux élémentaires recueillis sur chacun des noeuds 33 et 34.

Comme pour le pixel 10, les transistors 31 et 32 sont commandés chacun au moyen de deux interrupteurs 35, 36 pour le transistor 31 et 37, 38 pour le transistor 32. Les interrupteurs 35 et 37 permettent de raccorder le générateur de courant 23 et les interrupteurs 36 et 38 permettent de recopier la tension présente en chacun de noeuds 33 et 34 vers le circuit de lecture 20.

Les courants de fuite ou les capacités parasites qu'ils génèrent ont une moindre influence, sur le signal électrique de sortie du pixel, que lorsque les interrupteurs sont disposés en amont de l'actionneur 19 comme dans le premier mode de réalisation. En effet, dans ce premier mode représenté figure 1, lorsqu'on dispose des interrupteurs en amont de l'actionneur 19, c'est-à-dire dans une zone de forte impédance, ils peuvent générer des courants parasites, ou des capacités parasites, ces dernières se formant entre les bornes des interrupteurs et le circuit de commande. Cela modifie les charges au noeud du pixel, ce qui entraîne une fluctuation indésirable du signal de sortie du pixel.

Dans le second mode de réalisation représenté figure 2, on dispose les interrupteurs 35 à 38 en aval des interrupteurs 31 et 32 permettant la sélection de gamme, c'est-à-dire dans une zone de basse impédance. Les interrupteurs 35 à 38 ont donc une moindre influence sur le signal électrique de sortie du pixel.

Les deux photodiodes 11 et 12 sont préférentiellement de tailles différentes. On pourra sélectionner le signal élémentaire de celle de plus petite taille 12 pour une forte illumination. Dans ce cas, l'actionneur du pixel 30 est le transistor 32. Si l'illumination est faible, on sélectionnera le signal élémentaire de la photodiode de grande taille 13. Dans ce cas, l'actionneur du pixel 30 est le transistor 31. On peut aussi prévoir des photodiodes 11 et 12 de taille comparable, mais ayant des gains différents. Ceci permet de choisir l'une ou l'autre des deux photodiodes 11 et 12 en fonction du gain souhaité pour le pixel 30. Ainsi, selon ce mode de réalisation, le pixel est constitué d'une pluralité de photodiodes, disposées chacune en amont d'un actionneur. Pour chaque pixel, on choisit l'actionneur et la photodiode utilisée en fonction de l'intensité du rayonnement incident au détecteur.

Comme précédemment, la variante de la figure 2 n'est pas limitée à deux photodiodes, et on pourra en mettre en oeuvre autant que de besoin en fonction du nombre de gamme de gain souhaité. De plus, d'autres familles d'éléments photosensibles peuvent bien entendu être mise en oeuvre dans le cadre de cette variante. Enfin, un élément photosensible peut être formé de plusieurs photodétecteurs associés à un même noeud 33 ou 34.

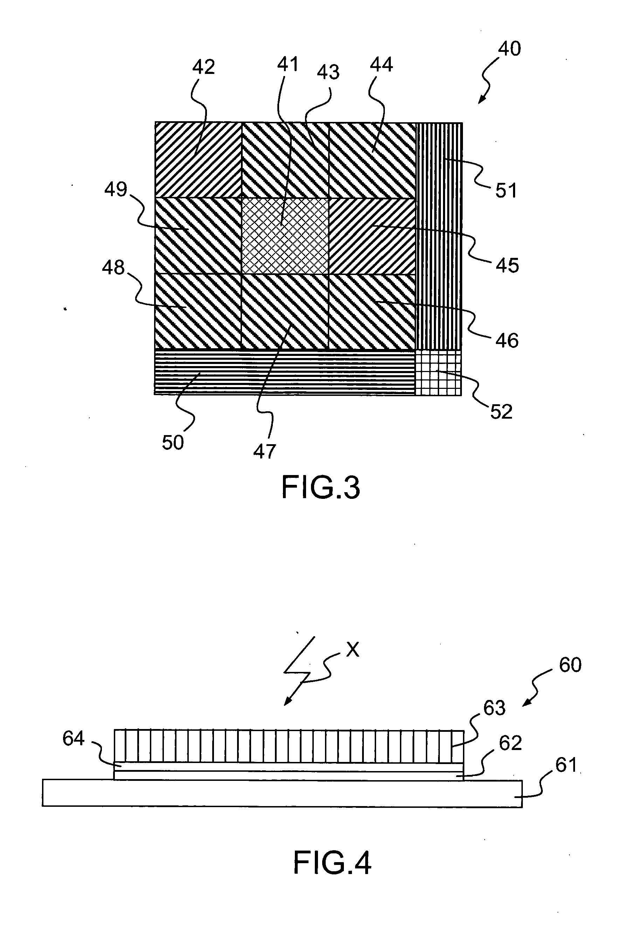

La figure 3 représente un exemple de disposition spatiale de plusieurs éléments photosensibles à l'intérieur d'un pixel 40. Cette disposition peut s'appliquer dans les deux variantes représentées sur les figures 1 et 2.

Le pixel 40 comprend un premier élément photosensible 41 utilisable seul pour les fortes illuminations. L'élément 41 a par exemple une forme carrée, ou éventuellement rectangulaire, pour minimiser les surfaces perdues. L'élément 41 est par exemple formé d'un seul photodétecteur. L'élément 41 est entouré de huit autres photodétecteurs 42 à 49 assemblés pour délivrer ensemble un seul signal élémentaire. Les huit photodétecteurs 42 à 49 ont avantageusement la même forme que le photodétecteur formant l'élément photosensible 41. Les photodétecteurs 42 à 49 sont simultanément utilisables pour les plus faibles illuminations. Autrement dit, ils sont connectés au même transistor, par exemple 31 dans la variante de la figure 2, ou au même interrupteur de sélection, par exemple 14, dans la variante de la figure 1. Les photodétecteurs 41 à 49 peuvent tous être identiques pour simplifier la réalisation du détecteur. Deux zones 50 et 51 sont utilisées pour le routage de conducteurs électriques entre les éléments 41 à 49 et une zone 52 dans laquelle sont implantés les différents interrupteurs électroniques et actionneur du pixel 40.

De façon plus générale chaque pixel 40 comprend un premier élément photosensible 41 utilisable pour une première gamme de gain entouré de plusieurs photodétecteurs 42 à 49 formant un second élément photosensible utilisable pour une seconde gamme de gain. Dans la variante de la figure 2, le premier élément photosensible et les photodétecteurs 42 à 49 sont respectivement raccordés à un premier actionneur potentiel et à un second actionneur potentiel, le terme potentiel désignant le fait que ces actionneurs sont alternativement l'actionneur du pixel 30. Selon l'intensité du rayonnement incident, on utilisera soit le premier élément photosensible et le premier actionneur potentiel, soit les photodétecteurs 42 à 49 et le second actionneur potentiel.

On comprendra que selon ce mode de réalisation, on peut disposer, au sein d'un même pixel, n groupes de photodétecteurs, chaque groupe de photodétecteurs comprenant au moins un élément photosensible, chaque groupe d'éléments photosensibles étant relié à un actionneur potentiel, de telle sorte qu'en fonction de l'intensité du rayonnement incident, on sélectionne un seul groupe de photodétecteurs et l'actionneur potentiel auquel il est relié.

La figure 4 représente un détecteur de rayonnement 60 utilisable en radiologie X ou gamma. Le détecteur est formé à partir d'un substrat 61, par exemple un substrat réalisé en silicium, sur lequel sont déposés les pixels organisés en matrice pour former un capteur photosensible 62. Le capteur 62 n'est pas sensible directement aux rayonnements de longueurs d'ondes très courtes comme le sont les rayons X ou gamma. C'est pourquoi, on associe au capteur photosensible 62 un convertisseur de rayonnement 63 qui comporte une couche d'une substance scintillatrice. Cette substance a la propriété, lorsqu'elle est excitée par de tels rayonnements, d'émettre un rayonnement de longueur d'onde supérieure, par exemple de la lumière visible ou proche du visible, auquel est sensible le capteur 62. La lumière émise par le convertisseur de rayonnement 63 illumine les éléments photosensibles du capteur 62 qui effectuent une conversion photoélectrique et délivrent des signaux électriques exploitables par les circuits de lecture 20. Le convertisseur de rayonnement 63 est couramment appelé scintillateur 63 qui peut être couplé au capteur 62 au moyen d'un film de colle 64 apte à transmettre le rayonnement émis par le scintillateur 63. Une fenêtre d'entrée, non représentée, peut recouvrir le scintillateur 63 pour le protéger des agressions du milieu extérieur.

Certaines substances scintillatrices de la famille des halogénures alcalins ou des oxysulfures de terres rares sont fréquemment employées pour leurs bonnes performances. Parmi les halogénures alcalins, l'iodure de césium dopé au sodium ou au thallium, selon que l'on souhaite une émission vers 400 nanomètres ou vers 550 nanomètres respectivement, est connu pour sa forte absorption des rayons X et pour son excellent rendement de scintillation. Il peut se présenter sous la forme de fines aiguilles que l'on fait croître sur un support. Cette famille de substances scintillatrice peut émettre de l'ordre de plusieurs centaines de photons visibles pour chaque photon X ayant interagi dans la couche scintillante.

La mise en oeuvre de l'invention dans un détecteur de rayonnement tel que décrit sur la figue 4 permet de ne perdre aucun photon X. En effet, le choix de la gamme de gain se fait uniquement en réduisant le nombre de photons visibles traités par le capteur 62.

## Revendications

1. Détecteur de rayonnement électromagnétique comprenant plusieurs pixels (10, 30, 40) organisés dans une matrice de lignes et de colonnes, chaque colonne, ou chaque ligne, de pixels étant reliée à un même bus de lecture (26) de la matrice, un pixel représentant l'élément sensible élémentaire du détecteur, chaque pixel convertissant le rayonnement électromagnétique (13) auquel il est soumis en un signal électrique, **caractérisé en ce que** chaque pixel (10, 30, 40) comprend :
• plusieurs éléments photosensibles (11, 12 ; 41 à 49), chaque élément photosensible convertissant le rayonnement reçu par l'élément photosensible (11, 12 ; 41 à 49) en un signal électrique élémentaire,
• et des moyens de sélection (14, 15 ; 31, 32) parmi les signaux électriques élémentaires générés par les éléments photosensibles (11, 12 ; 41 à 49) d'un pixel (10, 30, 40) pour former le signal électrique de sortie du pixel (10, 30, 40) en fonction d'une gamme de gain choisie pour le détecteur.

2. Détecteur selon la revendication 1, **caractérisé en ce que** le signal électrique élémentaire est formé de charges électriques accumulées par l'élément photosensible (11, 12 ; 41 à 49) sous forme d'une tension et **en ce que** le signal électrique de sortie est formé par une tension moyenne du ou des éléments photosensibles (11, 12 ; 41 à 49) sélectionnés.

3. Détecteur selon l'une des revendications précédentes, **caractérisé en ce que** chaque pixel (10) comprend un actionneur (19) du pixel (10) ouvert lors d'une phase de prise d'image au cours de laquelle signal électrique élémentaire de chaque photodiode (11, 12) est formé et fermé lors d'une phase de lecture du pixel (10) au cours de laquelle le signal électrique de sortie est transféré vers un circuit de lecture (20) du détecteur et **en ce que** les moyens pour sélectionner les signaux électriques élémentaires comprennent au moins un interrupteur de sélection (14, 15) permettant de raccorder respectivement au moins un des éléments photosensibles (11, 12) à l'actionneur (19).

4. Détecteur selon la revendication 3, **caractérisé en ce que** chaque pixel (10) comprend N éléments photosensibles (11, 12), N étant supérieur ou égal à deux et N-1 interrupteurs de sélection (14, 15), l'un des éléments photosensibles (11, 12) étant en permanence raccordé à l'actionneur de lecture (19).

5. Détecteur selon la revendication 4, **caractérisé en ce que** l'élément photosensible (12), en permanence raccordé à l'actionneur de lecture (19), génère un signal élémentaire plus faible que le ou les signaux élémentaires générés par le ou les autres éléments photosensibles (11) pour un même rayonnement électromagnétique (13).

6. Détecteur selon la revendication 1, **caractérisé en ce que** chaque pixel (30) comprend, associé à chaque élément photosensible (11, 12), un actionneur de lecture (31, 32) du pixel (30) ouvert lors d'une phase de prise d'image au cours de laquelle le signal électrique élémentaire est formé et pouvant être fermé lors d'une phase de lecture du pixel (30) pour transférer le signal électrique de sortie vers un circuit de lecture du détecteur, la fermeture d'un actionneur (31, 32) du pixel (30) permettant de sélectionner un des éléments photosensibles (11, 12) destiné à former le signal électrique de sortie du pixel (30).

7. Détecteur selon l'une des revendications précédentes, **caractérisé en ce qu'**un élément photosensible est formé de plusieurs photodétecteurs (42 à 49) convertissant le rayonnement reçu en un seul signal électrique élémentaire.

8. Détecteur selon la revendication 7, **caractérisé en ce que** chaque pixel (40) comprend un premier élément photosensible (41) utilisable pour une première gamme de gain entouré de plusieurs photodétecteurs (42 à 49) formant un second élément photosensible utilisable pour une seconde gamme de gain.

9. Détecteur selon l'une des revendications précédentes, **caractérisé en ce qu'**il comprend un scintillateur (63) qui convertit un rayonnement incident (X) en un rayonnement dans une bande de longueurs d'onde auxquelles sont sensibles les éléments photosensibles.

10. Détecteur selon l'une des revendications précédentes, **caractérisé en ce que** le pixel est monochrome.

11. Détecteur selon l'une des revendications précédentes, **caractérisé en ce qu'**il est formé à partir d'un substrat (61), sur lequel sont disposés les pixels (10, 30, 40).

## Patentansprüche

1. Detektor für elektromagnetische Strahlung, der mehrere Pixel (10, 30, 40) umfasst, die in einer Matrix von Reihen und Spalten organisiert sind, wobei jede Spalte oder jede Reihe von Pixeln mit demselben Lesebus (26) der Matrix verbunden ist, wobei ein Pixel das elementare sensitive Element des Detektors repräsentiert, wobei jedes Pixel die von ihm erfahrene elektromagnetische Strahlung (13) in ein elektrisches Signal umwandelt, **dadurch gekennzeichnet, dass** jedes Pixel (10, 30, 40) Folgendes umfasst:
• mehrere fotosensitive Elemente (11, 12; 41 bis 49), wobei jedes fotosensitive Element die von dem fotosensitiven Element (11, 12; 41 bis 49) empfangene Strahlung in ein elementares elektisches Signal umwandelt;
• und Mittel (14, 15; 31, 32) zum Auswählen zwischen den elementaren elektrischen Signalen, die von den fotosensitiven Elementen (11, 12; 41 bis 49) eines Pixels (10, 30, 40) erzeugt werden, um das elektrische Ausgangssignal des Pixels (10, 30, 40) in Abhängigkeit von einem für den Detektor gewählten Verstärkungsbereich zu bilden.

2. Detektor nach Anspruch 1, **dadurch gekennzeichnet, dass** das elementare elektrische Signal von elektrischen Ladungen gebildet wird, die von dem fotosensitiven Element (11, 12; 41 bis 49) in Form einer Spannung gesammelt werden, und dadurch, dass das elektrische Ausgangssignal von einer mittleren Spannung der ein oder mehreren gewählten fotosensitiven Elemente (11, 12; 41 bis 49) gebildet wird.

3. Detektor nach einem der vorherigen Ansprüche, **dadurch gekennzeichnet, dass** jedes Pixel (10) einen Aktuator (19) des Pixels (10) umfasst, der in einer Bildaufnahmephase offen ist, in deren Verlauf das elementare elektrische Signal jeder Fotodiode (11, 12) gebildet wird, und in einer Lesephase des Pixels (10) geschlossen ist, in deren Verlauf das elektrische Ausgangssignal zu einer Leseschaltung (20) des Detektors übertragen wird, und dadurch, dass die Mittel zum Auswählen der elementaren elektrischen Signale wenigstens einen Auswahlschalter (14, 15) umfassen, der es zulässt, dass das wenigstens eine der fotosensitiven Elemente (11, 12) jeweils mit dem Aktuator (19) verbunden wird.

4. Detektor nach Anspruch 3, **dadurch gekennzeichnet, dass** jedes Pixel (10) N fotosensitive Elemente (11, 12) umfasst, wobei N gleich oder größer als zwei ist, und N-1 Auswahlschalter (14, 15), wobei eines der fotosensitiven Elemente (11, 12) permanent mit dem Leseaktuator (19) verbunden ist.

5. Detektor nach Anspruch 4, **dadurch gekennzeichnet, dass** das permanent mit dem Leseaktuator (19) verbundene fotosensitive Element (12) ein elementares Signal erzeugt, das schwächer ist als das oder die elementare(n) Signal(e), das/die von dem oder den anderen fotosensitiven Element(en) (11) für dieselbe elektromagnetische Strahlung (13) erzeugt wird/werden.

6. Detektor nach Anspruch 1, **dadurch gekennzeichnet, dass** jedes Pixel, mit jedem fotosensitiven Element (11, 12) assoziiert, einen Aktuator (31, 32) zum Lesen des Pixels (30) umfasst, wobei der Aktuator in einer Bildaufnahmephase offen ist, in deren Verlauf das elementare elektrische Signal gebildet wird, und in einer Phase des Lesens des Pixels (30) geschlossen werden kann, um das elektrische Ausgangssignal zu einer Leseschaltung des Detektors zu übertragen, wobei das Schließen eines Aktuators (31, 32) des Pixels (30) das Auswählen von einem der fotosensitiven Elemente (11, 12) zulässt, die zum Bilden des elektrischen Ausgangssignals des Pixels (30) ausgelegt sind.

7. Detektor nach einem der vorherigen Ansprüche, **dadurch gekennzeichnet, dass** ein fotosensitives Element aus mehreren Fotodetektoren (42 bis 49) gebildet wird, die die empfangene Strahlung in ein einzelnes elementares elektrisches Signal umwandeln.

8. Detektor nach Anspruch 7, **dadurch gekennzeichnet, dass** jedes Pixel (40) ein erstes fotosensitives Element (41) umfasst, das für einen ersten Verstärkungsbereich benutzt werden kann, der von mehreren Lichtdetektoren (42 bis 49) umgeben ist, die ein zweites fotosensitives Element bilden, das für einen zweiten Verstärkungsbereich benutzt werden kann.

9. Detektor nach einem der vorherigen Ansprüche, **dadurch gekennzeichnet, dass** er einen Szintillator (63) umfasst, der eine einfallende Strahlung (X) in eine Strahlung in einem Band von Wellenlängen umwandelt, für die die fotosensitiven Elemente sensitiv sind.

10. Detektor nach einem der vorherigen Ansprüche, **dadurch gekennzeichnet, dass** das Pixel monochrom ist.

11. Detektor nach einem der vorherigen Ansprüche, **dadurch gekennzeichnet, dass** er von einem Substrat (61) gebildet wird, auf dem die Pixel (10, 30, 40) angeordnet sind.

## Claims

1. An electromagnetic radiation detector comprising a plurality of pixels (10, 30, 40) organised in a matrix of rows and columns, with each column or each row of pixels being connected to the same reading bus (26) of said matrix, with a pixel representing the elementary sensitive element of said detector, each pixel converting the electromagnetic radiation (13) to which it is exposed into an electrical signal, **characterised in that** each pixel (10, 30, 40) comprises:
• a plurality of photo-sensitive elements (11, 12; 41 to 49), with each photo-sensitive element converting the radiation received by the photo-sensitive element (11, 12; 41 to 49) into an elementary electrical signal;
• and means (14, 15; 31, 32) for selecting between the elementary electrical signals generated by the photo-sensitive elements (11, 12; 41 to 49) of a pixel (10, 30, 40) so as to form the output electrical signal of the pixel (10, 30, 40) as a function of a gain range selected for said detector.

2. The detector according to claim 1, **characterised in that** said elementary electrical signal is formed from electrical charges accumulated by the photo-sensitive element (11, 12; 41 to 49) in the form of a voltage, and **in that** the output electrical signal is formed by a mean voltage of the one or more selected photo-sensitive elements (11, 12; 41 to 49).

3. The detector according to any one of the preceding claims, **characterised in that** each pixel (10) comprises an actuator (19) of said pixel (10), which actuator is open during an image capture phase, during which the elementary electrical signal of each photodiode (11, 12) is formed, and is closed during a phase for reading said pixel (10), during which the electrical output signal is transferred toward a reading circuit (20) of said detector, and **in that** said means for selecting the elementary electrical signals comprise at least one selection switch (14, 15) allowing at least one of the photo-sensitive elements (11, 12), respectively, to be connected to the actuator (19).

4. The detector according to claim 3, **characterised in that** each pixel (10) comprises N photo-sensitive elements (11, 12), with N being greater than or equal to two, and N-1 selection switches (14, 15), with one of the photo-sensitive elements (11, 12) being permanently connected to the reading actuator (19).

5. The detector according to claim 4, **characterised in that** the photo-sensitive element (12) permanently connected to the reading actuator (19) generates an elementary signal that is weaker than the one or more elementary signals generated by the one or more other photo-sensitive elements (11) for the same electromagnetic radiation (13).

6. The detector according to claim 1, **characterised in that** each pixel (30) comprises, associated with each photo-sensitive element (11, 12), an actuator (31, 32) for reading the pixel (30), which actuator is open during an image capture phase, during which the elementary electrical signal is formed, and can be closed during a phase for reading said pixel (30) so as to transfer the output electrical signal toward a reading circuit of said detector, with the closure of an actuator (31, 32) of said pixel (30) allowing the selection of one of the photo-sensitive elements (11, 12) designed to form the output electrical signal of said pixel (30).

7. The detector according to any one of the preceding claims, **characterised in that** a photo-sensitive element is formed of a plurality of photo-detectors (42 to 49) converting the received radiation into a single elementary electrical signal.

8. The detector according to claim 7, **characterised in that** each pixel (40) comprises a first photo-sensitive element (41) that can be used for a first gain range surrounded by a plurality of photo-detectors (42 to 49) forming a second photo-sensitive element that can be used for a second gain range.

9. The detector according to any one of the preceding claims, **characterised in that** it comprises a scintillator (63) that converts an incident radiation (X) into a radiation in a band of wavelengths to which the photo-sensitive elements are sensitive.

10. The detector according to any one of the preceding claims, **characterised in that** the pixel is monochrome.

11. The detector according to any one of the preceding claims, **characterised in that** it is formed from a substrate (61), on which the pixels (10, 30, 40) are disposed.
